# EUROPÄISCHE PATENTSCHRIFT

(11) **EP 1 124 872 B1**
(45) Veröffentlichungstag und Bekanntmachung des Hinweises auf die Patenterteilung: **03.09.2003**
(21) Anmeldenummer: 99971433.0
(22) Anmeldetag: 18.10.1999
(51) Int. Cl.: C08G 18/10, C08G 18/48

(54) **ALKOXYSILAN-ENDGRUPPEN AUFWEISENDE POLYURETHANPREPOLYMERE, EIN VERFAHREN ZU IHRER HERSTELLUNG SOWIE IHRE VERWENDUNG ZUR HERSTELLUNG VON DICHTSTOFFEN**
POLYURETHANE PREPOLYMERS HAVING ALKOXYSILANE END GROUPS, METHOD FOR THE PRODUCTION THEREOF AND THEIR USE FOR THE PRODUCTION OF SEALANTS
POLYURETHANPREPOLYMERES AYANT DES GROUPES TERMINAUX D'ALCOXYSILANE, LEUR PROCEDE DE PRODUCTION ET LEUR UTILISATION POUR PRODUIRE DES MATIERES D'ETANCHEITE

(30) Priorität: 29.10.1998 DE 19849817
(43) Veröffentlichungstag der Anmeldung: 22.08.2001
(73) Patentinhaber: Bayer Aktiengesellschaft, 51368 Leverkusen (DE)
(72) Erfinder: WALTER, Ulrich DI, Deceased (DE); SCHMALSTIEG, Lutz, D-50676 Köln (DE); LEMMERZ, Ralf, D-51375 Leverkusen (DE); WILMES, Oswald, D-51061 Köln (DE)
(86) Internationale Anmeldenummer: EP9907883
(87) Internationale Veröffentlichungsnummer: WO00026271

(56) Entgegenhaltungen:
- EP-A- 0 372 561
- EP-A- 0 676 403
- EP-A- 0 831 108
- US-A- 4 645 816

## Beschreibung

Die Erfindung betrifft Alkoxysilan-Endgruppen aufweisende Polyurethanprepolymere auf Basis von speziellen, sehr hochmolekularen Polyurethanprepolymeren, ein Verfahren zu ihrer Herstellung sowie ihre Verwendung als Bindemittel für niedermodulige Dichtstoffe.

Alkoxysilanfunktionelle Polyurethane, die über eine Silanpolykondensation vernetzen sind lange bekannt. Ein Übersichtsartikel zu dieser Thematik findet sich z.B. in "Adhesives Age" 4/1995, Seite 30 ff. (Autoren: Ta-Min Feng, B. A. Waldmann). Derartige Alkoxysilan-terminierte, feuchtigkeitshärtende Einkomponenten-Polyurethane werden in zunehmendem Maße als weichelastische Beschichtungs-, Dichtungs- und Klebemassen im Bauwesen und in der Automobilindustrie verwendet. Bei diesen Anwendungen werden hohe Anforderungen an das Dehn-, Adhäsionsvermögen und an die Aushärtegeschwindigkeit gestellt. Insbesondere das im Baubereich geforderte Eigenschaftsniveau kann von den Systemen des Standes der Technik nicht in vollem Umfang erreicht werden.

In der EP-A-596 360 werden Alkoxysilyl-funktionelle Polyurethanprepolymere beschrieben, die sich als Dichtstoffbindemittel eignen. Die in dieser Patentanmeldung explizit beschriebenen Produkte eignen sich aber nicht zur Herstellung weicher und niedermoduliger Dichtstoffe, wie sie im Baubereich eingesetzt werden.

Das Eigenschaftsprofil für Dichtstoffe im Baubereich wird in der DIN ISO 11600 näher spezifiziert. Die gleiche Feststellung trifft auch im Hinblick auf die jüngst veröffentlichte Folgeanmeldungen zur EP-A 596 360 zu, namentlich die EP-A 831 108 und die EP-A 807 649. Die in diesem Stand der Technik beschriebenen Produkte eignen sich zur Herstellung von hochmoduligen Dichtstoffen wie sie im technischen Bereich eingesetzt werden, nicht aber zur Herstellung niedermoduliger Baudichtstoffe.

Aufgabe der vorliegenden Erfindung war es daher, Alkoxysilan-Endgruppen aufweisende Polyurethanprepolymere bereitzustellen, die sich als Bindemittel zur Herstellung niedermoduler Dichtstoffe eignen. Diese Aufgabe konnte mit der Bereitstellung der nachstehend näher beschriebenen Alkoxysilan- Endgruppen aufweisenden Polyurethanprepolymere auf Basis spezieller, sehr hochmolekularer Polyurethanprepolymere gelöst werden.

Gegenstand der Erfindung sind Alkoxysilan-Endgruppen aufweisende Polyurethanprepolymere die hergestellt werden durch Umsetzung von
A) linearen Polyurethanprepolymeren hergestellt durch Umsetzung von
   i) einer aromatischen, aliphatischen oder cycloaliphatischen Diisocyanatkomponente mit einem NCO-Gehalt von 20 bis 60 Gew.-% mit
   ii) einer Polyolkomponente, die als Hauptkomponente ein Polyoxyalkylendiol umfaßt, das ein Molekulargewicht von 3000 bis 20000 aufweist, mit
B) Alkoxysilan- und Aminogruppen aufweisenden Verbindungen der Formel (I) 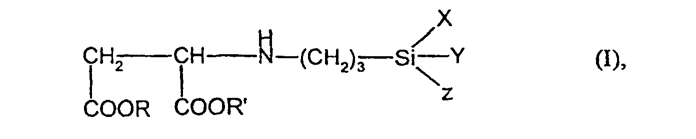
in welcher
- R und R': für gleiche oder verschiedene Alkylreste mit 1 bis 8 Kohlenstoffatomen, vorzugsweise 1 bis 4 Kohlenstoffatomen stehen
und
- X, Y, Z: für gleiche oder verschiedene C₁-C₈-Alkyl- oder C₁-C₈-Alkoxyreste mit 1 bis 4 Kohlenstoffatomenstehen stehen, mit der Maßgabe, daß mindestens einer der Reste für eine C₁-C₈-Alkoxygruppe steht,
dadurch gekennzeichnet, daß die Polyurethanprepolymere A) ein mittleres, aus NCO-Gehalt und NCO-Funktionalität berechnetes Molekulargewicht von 15000 bis 50000, vorzugsweise von 20 000 bis 40 000 aufweisen.

Vorzugsweise steht im Formel (I) X, Y und Z unabhängig voneinander für Methoxy oder Ethoxy.

Gegenstand der vorliegenden Erfindung ist auch ein Verfahren zur Herstellung Alkoxysilan-Endgruppen aufweisender Polyurethanprepolymere durch Umsetzung von
A) linearen Polyurethanprepolymeren eines mittleren, aus NCO-Gehalt und NCO-Funktionalität berechneten Molekulargewichts von 15000 bis 50000,
   mit
B) Alkoxysilan- und Aminogruppen aufweisenden Verbindungen der Formel (I) 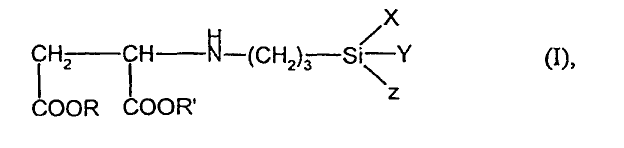
in welcher
- R und R': x für gleiche oder verschiedene Alkylreste mit 1 bis 8 Kohlenstoffatomen, vorzugsweise 1 bis 4 Kohlenstoffatomen stehen
und
- X, Y, Z: für gleiche oder verschiedene Alkyl- oder Alkoxyreste mit 1 bis 4 Kohlenstoffatomen stehen mit der Maßgabe, daß mindestens einer der Reste für eine Alkoxygruppe steht,
dadurch gekennzeichnet, daß die Polyurethanprepolymere A) ein mittleres, aus NCO-Gehalt und NCO-Funktionalität berechnetes Molekulargewichts von 15000 bis 50000 aufweisen.

Der Erfindung liegt die überraschende Beobachtung zugrunde, daß spezielle Alkoxysilan-Endgruppen aufweisende Polyurethanprepolymere eines sehr hohen Molekulargewichts trotz der niedrigen Anzahl an Vernetzungsstellen klebfrei aushärten und zu Dichtstoffen mit gutem Elastomerverhalten verarbeitet werden können.

Die erfindungsgemäß einzusetzenden Isocyanatprepolymere A) werden in der aus der Polyurethanchemie an sich bekannten Art und Weise durch Umsetzung einer Diisocyanatkomponente i) mit einer nachstehend näher charakterisierten Polyolkomponente ii) hergestellt.

Als Polyisocyanatkomponente i) erfindungsgemäß einsetzbare Isocyanate sind beliebige aliphatische, cycloaliphatische oder aromatische Diisocyanate des Standes der Technik mit einem Isocyanatgehalt von 20 bis 60 Gew.-%. Unter "aromatischen" bzw. "cycloaliphatischen" Diisocyanaten sind dabei solche zu verstehen, die pro Molekül mindestens einen aromatischen bzw. cycloaliphatischen Ring aufweisen, wobei vorzugsweise, jedoch nicht zwingend, mindestens eine der beiden Isocyanatgruppen direkt mit einem aromatischen bzw. cycloaliphatischen Ring verknüpft ist. Als Komponente i) bzw. Teil der Komponente i) bevorzugt geeignet sind aromatische oder cycloaliphatische Diisocyanate des Molekulargewichtsbereichs 174 bis 300 wie 4,4'-Diphenylmethandiisocyanat, gegebenenfalls im Gemisch mit 2,4'-Diphenylmethandiisocyanat, 2,4-Diisocyanatotoluol dessen technische Gemische mit vorzugsweise bis zu 35 Gew.-%, bezogen auf Gemisch, an 2,6-Diisocyanatotoluol, 1-Isocyanato-3,3,5-trimethyl-5-isocyanatomethylcyclohexan (IPDI), Bis-(4-isocyanatocyclohexyl)methan, 1-Isocyanato-1-methyl-4(3)-isocyanatomethyl-cyclohexan, 1,3-Diisocyanato-6-methyl-cyclohexan, gegebenenfalls im Gemisch mit 1,3-Diisocyanato-2-methylcyclohexan. Selbstverständlich sind auch Mischungen der genannten Isocyanate einsetzbar.

Besonders bevorzugt wird als Komponente i) 1-Isocyanato-3,3,5-trimethyl-5-isocyanatomethylcyclohexan (IPDI) und/oder 2,4-Diisocyanatotoluol bzw. dessen technische Gemische mit vorzugsweise bis zu 35 Gew.-%, bezogen auf Gemisch, an 2,6-Diisocyanatotoluol eingesetzt.

Zur Herstellung der Polyurethanprepolymere A) wird die Diisocyanatkomponente i) mit einer Polyolkomponente ii) umgesetzt. Als Hauptkomponente enthält die Polyolkomponente ii) ein Polyoxyalkylendiol, das ein Molekulargewicht von 3000 bis 20000 (entsprechend einer OH-Zahl von 37,3 bis 5,6), vorzugsweise 4000 bis 15000 (entsprechend einer OH-Zahl von 28 bis 7,5) aufweist. Die erfindungsgemäß bevorzugt einsetzbaren Polyoxyalkylendiole sind solche der aus der Polyurethanchemie an sich bekannten Art wie sie durch Ethoxylierung und oder Propoxylierung geeigneter Startermoleküle hergestellte werden können. Geeignete Startermoleküle sind beispielsweise Diole wie Ethylenglykol, Propylenglykol, 1,3-Butandiol, 1,4 Butandiol, 1,6 Hexandiol, 2-Ethylhexandiol-1,3 oder auch primäre Monoamine wie beispielsweise aliphatische Amine wie Ethylamin oder Butylamin. Bevorzugt einsetzbare Polyoxyalkylendiole weisen ein mittleres, aus OH-Gehalt und Funktionalität berechnetes Molekulargewicht von 3000 bis 20000, vorzugsweise 4000 bis 15000 auf und einen Ethylenoxydgehalt von maximal 20 Gew.-%, bezogen auf Gesamtgewicht des Polyoxyalkylendiols.

Ganz besonders bevorzugt werden als Komponente ii) Polypropylenoxydpolyether mit einen Gesamt-Unsättigungsgrad von maximal 0,04 mÄq/g und einem mittleren, aus OH-Gehalt und Funktionalität berechneten Molekulargewicht von 8000 bis 12000 eingesetzt.

Die erfindungsgemäß besonders bevorzugt einsetzbaren Polyetherpolyole mit niedrigem Unsättigungsgrad sind prinzipiell bekannt und werden beispielhaft beschrieben in den EP-A 283 148, US-A 3 278 457, US-A 3 427 256, US-A 3 829 505, US-A 4 472 560, US-A 3 278 458, US-A 3 427 334, US-A 3 941 849, US-A 4 721 818, US-A 3 278 459, US-A 3 427 335, US-A 4 355 188.

Erfindungsgemäß einsetzbare Polyetherpolyole haben einen niedrigen Unsättigungsgrad und werden vorzugsweise unter Katalyse mit Metallcyaniden hergestellt. Die Tatsache, daß die besonders bevorzugt einsetzbaren Polyetherpolyole mit niedrigem Unsättigungsgrad besonders vorteilhaft zur Herstellung weicher und niedermoduliger Dichtstoffe eingesetzbar sind muß als ausgesprochen überraschend bezeichnet werden, da gemäß dem Stand der Technik durch die Verwendung derartiger Polyole härtere Polyurethane mit höheren Moduli hergestellt werden.

Bei der Herstellung der NCO-Prepolymere A) können gegebenenfalls untergeordnete Mengen an niedermolekularen 2 und 3-wertigen Alkoholen des Molekulargewichts 32 bis 500 mitverwendet werden. Beispielhaft genannt seien Ethylenglykol, Propylenglykol, 1,3-Butandiol, 1,4-Butandiol, 1,6-Hexandiol, Glycerin oder Trimethylolpropan. Die Mitverwendung niedermolekularer Alkohole ist aber keineswegs bevorzugt.

Bei der Herstellung der NCO-Prepolymere A) können weiterhin untergeordnete Mengen an polyfunktionellen Polyetherpolyolen des Standes der Technik mitverwendet werden, obwohl auch dies keineswegs bevorzugt ist.

Die Herstellung der erfindungsgemäß als Komponente A) einsetzbaren Polyurethanprepolymere erfolgt durch Umsetzung der Diisocyanatkomponente i) mit der Diolkomponente ii) im Temperaturbereich von 40 bis 120°C, vorzugsweise 50 bis 100°C unter Einhaltung eines NCO/OH-Äquivalentverhältnisses von 1,2:1 bis 1,8:1, vorzugsweise 1,3:1 bis 1,6:1. Gegebenenfalls können bei der Herstellung der Polyurethanprepolymeren die aus der Polyurethanchemie an sich bekannten aminschen oder metallorganischen Katalysatoren mitverwendet werden.

Die erfindungsgemäß einsetzbaren Polyurethanprepolymere A) weisen einen NCO-Gehalt von 0,21 bis 0,56 % auf, vorzugsweise 0,28 bis 0,42 %, entsprechend einem mittleren Molekulargewicht von 15000 bis 50000, vorzugsweise 20000 bis 40000.

Die erfindungsgemäß einsetzbaren Polyurethanprepolymere A) werden in der zweiten Stufe des erfindungsgemäßen Verfahrens umgesetzt mit Verbindungen der Formel (I) 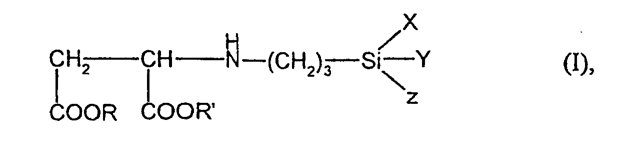 in welcher
- R und R': für gleiche oder verschiedene Alkylreste mit 1 bis 8 Kohlenstoffatomen, vorzugsweise 1 bis 4 Kohlenstoffatomen, ganz besonders bevorzugt 1 bis 2 Kohlenstoffatomen stehen
und
- X, Y, Z: für gleiche oder verschiedene Alkyl- oder Alkoxyreste mit 1 bis 4 Kohlenstoffatomen stehen, mit der Maßgabe, daß mindestens einer der Reste, vorzugsweise alle 3 Reste für eine C₁-C₈-Alkoxygruppe stehen.

Die Herstellung der erfindgungsgemäß einzusetzenden Alkoxysilan- und Aminogruppen aufweisenden Verbindungen erfolgt wie in der EP-A 596 360 beschrieben durch Umsetzung von Aminoalkylalkoxysilanen der Formel (II) 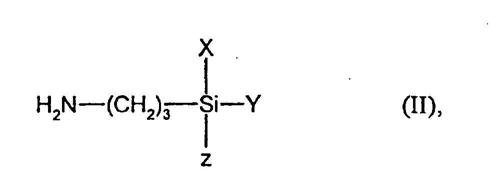 in welcher
X, Y und Z die bei Formel (I) angegebene Bedeutung haben,
mit Malein- und/oder Fumarsäureestern der Formel (III) 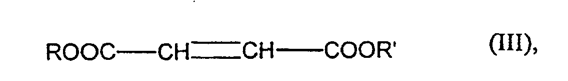 in welcher

R und R' unabhängig voneinander für C₁-C₈-Alkyl stehen.

Beispiele für geeignete Aminoalkylalkoxysilane der Formel (II) sind 3-Aminopropyltrimethoxysilan, 3-Aminopropyltriethoxysilan, 3-Aminopropyl-methyl-diethoxysilan; 3-Aminopropyltrimethoxysilan und 3-Aminopropyltriethoxysilan sind besonders bevorzugt.

Die Umsetzung der NCO-Prepolymeren mit den Alkoxysilan- und Aminogruppen aufweisenden Verbindungen der Formel (I) im erfindungsgemäßen Verfahren erfolgt innerhalb eines Temperaturbereichs von 0 bis 150°C, vorzugsweise 20 - 80°C, wobei die Mengenverhältnisse in der Regel so gewählt werden, daß pro Mol eingesetzter NCO-Gruppen 0,95 bis 1,1 Mol Aminosilylverbindung eingesetzt werden. Vorzugsweise wird pro Mol eingesetzter NCO-Gruppen 1 Mol Aminosilylverbindung eingesetzt. Bei Anwendung höherer Reaktionstemperaturen kann es gemäß der Lehre der EP-A 807 649 zu einer Cyclokondensationsreaktion kommen, die aber keineswegs störend ist und mitunter sogar vorteilhaft sein kann.

Ein weiterer Gegenstand der Erfindung ist die Verwendung der erfindungsgemäßen Alkoxysilan- Endgruppen aufweisenden Polyurethanprepolymere als Bindemittel zur Herstellung von isocyanatfreien niedermoduligen Polyurethandichtstoffen vorzugsweise für den Baubereich. Diese Dichtstoffe vernetzen unter Einwirkung von Luftfeuchtigkeit über eine Silanpolykondensation.

Zur Herstellung solcher Dichtstoffe können die erfindungsgemäßen Alkoxysilan-Endgruppen aufweisenden Polyurethanprepolymere zusammen mit üblichen Weichmachem, Füllstoffen, Pigmenten, Trockenmitteln, Additiven, Lichtschutzmitteln, Antioxidantien, Thixotropiermitteln, Katalysatoren, Haftvermittlern und gegebenenfalls weiteren Hilfs- und Zusatzstoffen nach bekannten Verfahren der Dichtstoffherstellung formuliert werden.

Als geeignete Füllstoffe seien beispielhaft Ruß, Fällungskieselsäuren, pyrogene Kieselsäuren, mineralische Kreiden und Fällungskreiden genannt. Als geeignete Weichmacher seien beispielhaft Phtalsäureester, Adipinsäureester, Alkylsulfonsäureester des Phenols oder Phosphorsäureester genannt.

Als Thixotropiermittel seien beispielhaft pyrogene Polyamide, hydrierte Ricinusöl-Folgeprodukte oder auch Polyvinylchlorid genannt.

Als geeignete Katalysatoren zur Aushärtung seien Organozinnverbindungen und aminische Katalysatoren genannt.

Als Organozinnverbindungen seien beispielhaft genannt: Dibutylzinndiacetat, Dibutylzinndilaurat, Dibutylzinn-bis-acetoacetonat und Zinncarboxylate wie beispielsweise Zinnoctoat. Die genannten Zinnkatalysatoren können gegebenenfalls in Kombination mit aminischen Katalysatoren wie Aminosilanen oder Diazabicyclooctan verwendet werden.

Als Trockenmittel seien insbesondere Alkoxysilylverbindungen genannt wie Vinyltrimethoxysilan, Methyltrimethoxysilan, i-Butyltrimethoxysilan, Hexadecyltrimethoxysilan.

Als Haftvermittler werden die bekannten funktionellen Silane eingesetzt wie beispielsweise Aminosilane der vorstehend genannten Art aber auch Aminoethyl-3-aminopropyl-trimethoxy und/oder N-Aminoethyl-3-aminopropyl-methyl-dimethoxysilan, Epoxysilane und/oder Mercaptosilane.

Die vernetzten Polymere zeichnen sich aus durch hervorragende Dehnbarkeit bei gleichzeitig niedrigem Modul. InsbesondereProdukte auf Basis der bevorzugt als Diolkomponente ii) einzusetzenden Polyoxypropylenglykole mit niedrigem Gesamtunsättigungsgrad zeichnen sich durch niedrige Moduli, excellente mechanische Eigenschaften und eine geringe Oberflächenklebrigkeit aus.

### Beispiele

### Beispiel 1

4000 g eines Polypropylenglykols der OH-Zahl 14 mit einem Unsättigungsgrad von 0,005 mÄq/g (Acclaim 8200 der Fa. Arco) werden mit 166,5 g Isophorondiisocyanat bei 100°C bis zum Erreichen des theoretischen NCO-Gehaltes von 0,5 % prepolymerisiert. Das erhaltene Polyurethanprepolymer hat ein berechnetes mittleres Molekulargewicht von 16600. Nach Abkühlen auf 60°C tropft man 175,5 g N-(3-Trimethoxysilylpropyl)asparaginsäure-diethylester (hergestellt gemäß EP-A 596 360, Bsp. 5) zügig zu und rührt, bis im IR-Spektrum keine Isocyanatbande mehr zu sehen ist. Das erhaltene Alkoxysilyl-Endgruppen aufweisende Polyurethanprepolymer hat eine Viskosität von 26000 mPas (23°C).

Ein auf eine Glasplatte gegossener Film härtet unter Katalyse mit Dibutylzinndiacetat über Nacht zu einem klaren, hochelastischen Kunststoff einer Shore A-Härte von 13.

### Beispiel 2

2000 g eines Polyetherdiols der OH-Zahl 28, hergestellt durch Propoxylierung von Propylenglykol und anschließende Ethoxylierung des Propoxylierungsproduktes (PO/EO-Verhältnis = 80:20) werden mit 104,4 g 2,4-Toluylendiisocyant bei 80°C bis zum Erreichen des theoretischen NCO-Gehaltes von 0,6 % prepolymerisiert. Das erhaltene Polyurethanprepolymer hat ein berechnetes mittleres Molekulargewicht von 21000. Nach Abkühlen auf 60°C tropft man 64,6 g N-(3-Trimethoxysilylpropyl)asparaginsäure-dimethylester (hergestellt gemäß EP-A 596 360, Bsp. 4) zügig zu und rührt, bis im IR-Spektrum keine Isocyanatbande mehr zu sehen ist. Das erhaltene Alkoxysilyl-Endgruppen aufweisende Polyurethanprepolymer hat eine Viskosität von 96000 mPas (23°C).

Ein auf eine Glasplatte gegossener Film härtet unter Katalyse mit Dibutylzinndiacetat über Nacht zu einem klaren, hochelastischen Kunststoff einer Shore A-Härte von 9.

### Beispiel 3

4000 g eines Polypropylenglykols der OH-Zahl 14 mit einem Unsättigungsgrad von 0,005 mÄq/g (Acclaim 8200 der Fa. Arco) werden mit 155,4 g Isophorondiisocyanat bei 100°C bis zum Erreichen des theoretischen NCO-Gehaltes von 0,4 % prepolymerisiert. Das erhaltene Polyurethanprepolymer hat ein berechnetes mittleres Molekulargewicht von 21000. Nach Abkühlen auf 60°C tropft man 140,4 g N-(3-Trimethoxysilylpropyl)asparaginsäure-diethylester (hergestellt gemäß EP-A 596 360, Bsp. 5) zügig zu und rührt, bis im IR-Spektrum keine Isocyanatbande mehr zu sehen ist. Das erhaltene Alkoxysilyl-Endgruppen aufweisende Polyurethanprepolymer hat eine Viskosität von 28000 mPas (23°C).

Ein auf eine Glasplatte gegossener Film härtet unter Katalyse mit Dibutylzinndiacetat innerhalb von 24 Stunden zu einem elastischen Kunststoff einer Shore A-Härte von 15.

### Beispiel 4

5300 g eines Polypropylenglykols der OH-Zahl 10,6 mit einem Unsättigungsgrad von 0,005 mÄq/g (Acclaim 12200 der Fa. Arco) werden mit 147,9g eines technischen Gemisches enthaltend 80 Gew.-% 2,4-Toluylendiisocyanat und 20 Gew.-% 2,6-Toluylendiisocyanat bei 80°C bis zum Erreichen des theoretischen NCO-Gehaltes von 0,54 % prepolymerisiert. Das erhaltene Polyurethanprepolymer hat ein berechnetes mittleres Molekulargewicht von 15500. Nach Abkühlen auf 60°C tropft man 226,1 g N-(3-Trimethoxysilylpropyl)asparaginsäure-dimethyl-ester (hergestellt gemäß EP-A 596 360, Bsp. 4) zügig zu und rührt, bis im IR-Spektrum keine Isocyanatbande mehr zu sehen ist. Das erhaltene Alkoxysilyl-Endgruppen aufweisende Polyurethanprepolymer hat eine Viskosität von 25000 mPas (23°C).

Ein auf eine Glasplatte gegossener Film härtet unter Katalyse mit Dibutylzinndiacetat innerhalb von 24 Stunden zu einem elastischen Kunststoff einer Shore A-Härte von 12

### Beispiel 5

5300 g eines Polypropylenglykols der OH-Zahl 10,6 mit einem Unsättigungsgrad von 0,005 mÄq/g (Acclaim 12200 der Fa. Arco) werden mit 166,5 g Isophorondiisocyanat bei 100°C bis zum Erreichen des theoretischen NCO-Gehaltes von 0,38 % prepolymerisiert. Das erhaltene Polyurethanprepolymer hat ein berechnetes mittleres Molekulargewicht von 22000. Nach Abkühlen auf 60°C tropft man 175,5 g N-(3-Trimethoxysilylpropyl)asparaginsäure-diethylester (hergestelit gemäß EP-A 596 360, Bsp. 5) zügig zu und rührt, bis im IR-Spektrum keine Isocyanatbande mehr zu sehen ist. Das erhaltene Alkoxysilyl-Endgruppen aufweisende Polyurethanprepolymer hat eine Viskosität von 30000 mPas (23°C).

Ein auf eine Glasplatte gegossener Film härtet unter Katalyse mit Dibutylzinndiacetat innerhalb von 24 Stunden zu einem elastischen Kunststoff einer Shore A-Härte von 12.

### Beispiel 6

### Herstellung eines isocyanatfreien Polyurethandichtstoffs:

In einem handelsüblichen Planetenmischer werden die folgenden Komponenten zu einem gebrauchsfertigen Dichtstoff verarbeitet:

| | |
|---|---|
| 41,6 Gew-Teile | Prepolymer aus Beispiel 3 |
| 14,6 Gew.-Teile | Diisoundecylphtalat (Weichmacher) |
| 0,20 Gew.-Teile | Dibutylzinn-bis-acetoacetonat (10 %ig gelöst in Solventnaphta 100) |
| 1,50 Gew.-Teile | Vinyltrimethoxysilan |
| 41,6 Gew.-Teile | Fällungskreide (Typ: Socal U1S2) |

Die Mischung wird 10 Minuten bei einem Druck von 100 mbar dispergiert, wobei die Innentemperatur auf 60°C ansteigt. Anschließend werden
0,5 Gew.-Teile N-Aminoethyl-3-aminopropyl-methyldimethoxysilan
zugegeben und bei einem Druck von 100 mbar durch 10 minütiges Rühren eingearbeitet.

Der so hergestellte Dichtstoff zeigt eine ausgezeichnete Standfestigkeit, haftet auf nahezu allen Untergründen und härtet mit einer Hautbildungszeit von ca. 1,5 Stunden aus.

## Patentansprüche

1. Alkoxysilan-Endgruppen aufweisende Polyurethanprepolymere die hergestellt werden durch Umsetzung von
A) linearen Polyurethanprepolymeren hergestellt durch Umsetzung von
i) einer aromatischen, aliphatischen oder cycloaliphatischen Diisocyanatkomponente mit einem NCO-Gehalt von 20 % bis 60 % mit
ii) einer Polyolkomponente, die als Hauptkomponente ein Polyoxyalkylendiol umfaßt, das ein Molekulargewicht von 3000 bis 20000 aufweist, mit
B) Alkoxysilan- und Aminogruppen aufweisenden Verbindungen der Formel (I) 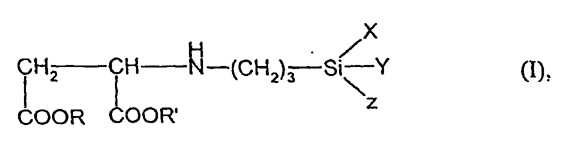 in welcher
R und R' für gleiche oder verschiedene Alkylreste mit 1 bis 8 Kohlenstoffatomen, vorzugsweise 1 bis 4 Kohlenstoffatomen stehen
und
X, Y, Z für gleiche oder verschiedene Alkyl- oder Alkoxyreste mit 1 bis 4 Kohlenstoffatomen stehen mit der Maßgabe, daß mindestens einer der Reste, für eine Alkoxygruppe steht,
**dadurch gekennzeichnet, daß** die Polyurethanprepolymere A) ein mittleres, aus NCO-Gehalt und NCO-Funktionalität berechnetes Molekulargewichts von 15000 bis 50000 aufweisen.

2. Alkoxysilan-Endgruppen aufweisende Polyurethanprepolymere gemäß Anspruch 1, **dadurch gekennzeichnet, daß** die Polyurethanprepolymere A) ein mittleres, aus NCO-Gehalt und NCO-Funktionalität berechnetes Molekulargewichts von 20000 bis 40000 aufweisen.

3. Alkoxysilan-Endgruppen aufweisende Polyurethanprepolymere gemäß Anspruch 1, **dadurch gekennzeichnet, daß** zur Herstellung der Polyurethanprepolymere A) Polypropylenoxydpolyether mit einen Gesamt-Unsättigungsgrad von maximal 0,04 mÄq/g und einem mittleren, aus OH-Gehalt und Funktionalität berechneten Molekulargewicht von 8000 bis 20000 eingesetzt werden.

4. Alkoxysilan-Endgruppen aufweisende Polyurethanprepolymere gemäß Anspruch 1, **dadurch gekennzeichnet, daß** X,Y, und Z unabhängig voneinander für Methoxy- oder Ethoxy stehen.

5. Verfahren zur Herstellung von Alkoxysilan-Endgruppen aufweisenden Polyurethanprepolymeren gemäß Anspruch 1 bis 4 durch Umsetzung von
A) linearen Polyurethanprepolymeren eines mittleren, aus NCO-Gehalt und NCO-Funktionalität berechneten Molekulargewichts von 15000 bis 50000,
mit
B) Alkoxysilan- und Aminogruppen aufweisenden Verbindungen der Formel (I) 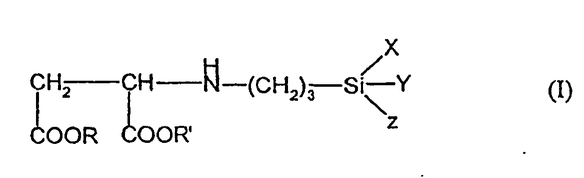 in welcher
R und R' für gleiche oder verschiedene Alkylreste mit 1 bis 8 Kohlenstoffatomen, vorzugsweise 1 bis 4 Kohlenstoffatomen stehen und
X, Y, Z für gleiche oder verschiedene Alkyl- oder Alkoxyreste mit 1 bis 4 Kohlenstoffatomen stehen mit der Maßgabe, daß mindestens einer der Reste, für eine Alkoxygruppe steht,
**dadurch gekennzeichnet, daß** die Polyurethanprepolymere A) ein mittleres, aus NCO-Gehalt und NCO-Funktionalität berechnetes Molekulargewichts von 15000 bis 50000 aufweisen.

6. Verwendung Alkoxysilan-Endgruppen aufweisender Polyurethanprepolymere gemäß Anspruch 1 zur Herstellung von Dichtstoffen.

## Claims

1. Polyurethane prepolymers which comprise alkoxysilane terminal groups and which are produced by the reaction of
A) linear polyurethane prepolymers, produced by the reaction of
i) an aromatic, aliphatic or cycloaliphatic diisocyanate component having an NCO content of 20 % to 60 %, with
ii) a polyol component which comprises a polyoxyalkylene diol as its main component and which has a molecular weight of 3,000 to 20,000, with
B) compounds of formula (I) which comprise alkoxysilane and amino groups 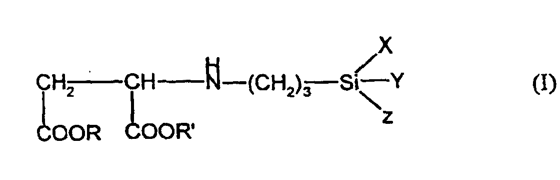 in which
R and R' represent identical or different alkyl radicals comprising 1 to 8 carbon atoms, preferably 1 to 4 carbon atoms,
and
X, Y, Z represent identical or different alkyl or alkoxy radicals comprising 1 to 4 carbon atoms, with the proviso that at least one of the radicals represents an alkoxy group,
**characterised in that** the polyurethane prepolymers A) have a mean molecular weight from 15,000 to 50,000 as calculated from their NCO content and NCO functionality.

2. Polyurethane prepolymers comprising alkoxysilane terminal groups according to claim 1, **characterised in that** the polyurethane prepolymers A) have a mean molecular weight from 20,000 to 40,000 as calculated from their NCO content and NCO functionality.

3. Polyurethane prepolymers comprising alkoxysilane terminal groups according to claim 1, **characterised in that** polypropylene oxide polyethers having a maximum total degree of unsaturation of 0.04 milliequivalent/g and a mean molecular weight from 8,000 to 20,000 as calculated from their OH content and functionality, are used for the production of polyurethane prepolymers A).

4. Polyurethane prepolymers comprising alkoxysilane terminal groups according to claim 1, **characterised in that** X, Y and Z, independently of each other, represent methoxy or ethoxy.

5. A method of producing polyurethane prepolymers comprising alkoxysilane terminal groups according to any of claims 1 to 4, by the reaction of
A) linear polyurethane prepolymers with a mean molecular weight from 15,000 to 50,000 as calculated from their NCO content and NCO functionality,
with
B) compounds of formula (I) which comprise alkoxysilane and amino groups 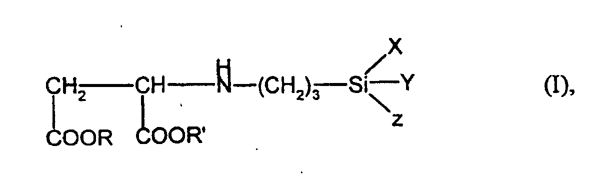 in which
R and R' represent identical or different alkyl radicals comprising 1 to 8 carbon atoms, preferably 1 to 4 carbon atoms,
and
X, Y, Z represent identical or different alkyl or alkoxy radicals comprising 1 to 4 carbon atoms, with the proviso that at least one of the radicals represents an alkoxy group,
**characterised in that** the polyurethane prepolymers A) have a mean molecular weight from 15,000 to 50,000 as calculated from their NCO content and NCO functionality.

6. Use of polyurethane prepolymers comprising alkoxysilane terminal groups according to claim 1 for the production of sealing materials.

## Revendications

1. Prépolymères de polyuréthanne présentant des radicaux terminaux alcoxysilane, qui sont préparés par réaction :
A) de prépolymères de polyuréthanne linéaires préparés par réaction de :
i) un composant diisocyanate aromatique, aliphatique ou cycloaliphatique avec une teneur NCO de 20% à 60%, avec
ii) un composant polyol, qui comprend comme composant principal, un polyoxyalcoylènediol, qui présente un poids moléculaire allant de 3000 à 20 000, avec
B) des composés présentant des radicaux alcoxysilane et amino, de la formule (I) : 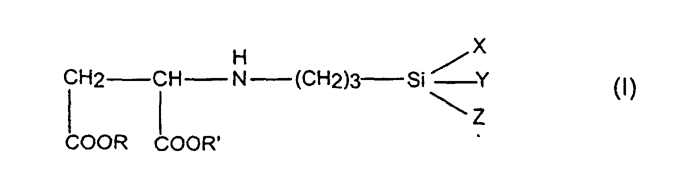
dans laquelle :
R et R' représentent des restes alcoyle identiques ou différents, ayant 1 à 8 atomes de carbone, de préférence de 1 à 4 atomes de carbone, et
X, Y, Z représentent des restes alcoyle ou alcoxy identiques ou différents, ayant 1 à 4 atomes de carbone, avec la condition qu'au moins un des restes représente un radical alcoxy,
**caractérisés en ce que** les prépolymères de polyuréthanne A) présentent un poids moléculaire moyen, calculé sur la teneur en NCO et la fonctionnalité NCO, allant de 15 000 à 50 000.

2. Prépolymères de polyuréthanne présentant des radicaux terminaux alcoxysilane suivant la revendication 1, **caractérisés en ce que** les prépolymères de polyuréthanne A) présentent un poids moléculaire moyen, calculé sur la teneur en NCO et la fonctionnalité NCO, allant de 20 000 à 40 000.

3. Prépolymères de polyuréthanne présentant des radicaux terminaux alcoxysilane suivant la revendication 1, **caractérisés en ce que** pour la préparation du prépolymères de polyuréthanne A), on met en ouvre un polyéther de poly(oxyde de propylène) avec un taux global d'insaturation de au maximum 0,04 méq/g et un poids moléculaire moyen, calculé sur la teneur et la fonctionnalité OH, allant de 8000 à 20 000.

4. Prépolymères de polyuréthanne présentant des radicaux terminaux alcoxysilane suivant la revendication 1, **caractérisés en ce que** X, Y et Z représentent indépendamment l'un de l'autre, le radical méthoxy ou éthoxy.

5. Procédé de préparation de prépolymères de polyuréthanne présentant des radicaux terminaux alcoxysilane suivant les revendications 1 à 4, par réaction :
A) des prépolymères de polyuréthanne linéaires ayant un poids moléculaire moyen, calculé sur la teneur NCO et la fonctionnalité NCO, allant de 15 000 à 50 000, avec
B) des composés présentant des radicaux alcoxysilane et amino, de la formule (I) : 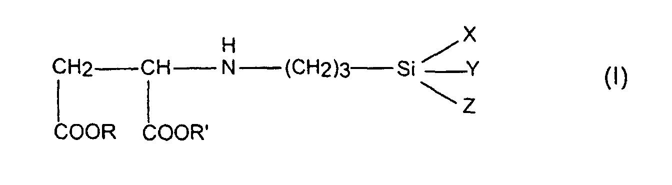
dans laquelle :
R et R' représentent des restes alcoyle identiques ou différents, ayant 1 à 8 atomes de carbone, de préférence de 1 à 4 atomes de carbone, et
X, Y, Z représentent des restes alcoyle ou alcoxy identiques ou différents, ayant 1 à 4 atomes de carbone, avec la condition qu'au moins un des restes représente un radical alcoxy,
**caractérisé en ce que** les prépolymères de polyuréthanne A) présentent un poids moléculaire moyen, calculé sur la teneur en NCO et la fonctionnalité NCO, allant de 15 000 à 50 000.

6. Utilisation de prépolymères de polyuréthanne présentant des radicaux terminaux alcoxysilane suivant la revendication 1, pour la préparation de matières étanches.
